# EUROPEAN PATENT SPECIFICATION

(11) **EP 1 270 346 B1**
(45) Date of publication and mention of the grant of the patent: **07.12.2005**
(21) Application number: 02253743.5
(22) Date of filing: 28.05.2002
(51) Int. Cl.: B60R 22/34, B60R 22/28

(54) **Retractor spool**
Retraktor-Spule
Bobine de rétracteur

(30) Priority: 19.06.2001 GB 0114926
(43) Date of publication of application: 02.01.2003
(73) Proprietor: KEY SAFETY SYSTEMS, INC., Sterling Heights, Michigan 48314 (US)
(72) Inventor: Bell, John, Carlisle, Cumbria CA2 6QU (GB); Park, Andrew, Wigton, Cumbria CA7 9PF (GB); Palliser, Martyn, Carlisle, Cumbria CA5 7NF (GB)
(74) Representative: W.P. Thompson & Co.

(56) References cited:
- DE-C- 19 901 143
- DE-U- 29 613 044
- GB-A- 2 354 208
- US-A- 4 967 976
- US-B1- 6 202 957

## Description

The present invention relates to a spool for a retractor for a vehicle occupant safety restraint seat belt arrangement and particularly to a spool for a load limiting retractor comprising a torsion bar.

A seat belt safety restraint generally comprises belt webbing wound on a spool which is mounted for rotation about its longitudinal axis to wind in or pay out webbing. The spool is biased in a winding-in direction by a spiral spring. A sensor detects a crash, for example by detecting acceleration or deceleration above a predetermined threshold, and activates a locking mechanism to lock the spool against rotation and prevent further pay-out of webbing, thus restraining the occupant against forward motion.

A torsion bar is a well known part of a modern load limiting retractor and is arranged in the force path to absorb some of the crash forces to reduce the effects of the seat belt restraint on the occupant in a crash and thus reduce the possibility of injuries caused by the restraint itself. A torsion bar is maleable and deforms plastically as it twists, without shearing, and allows a small amount of payout of webbing after the spool has been locked against rotation. A torsion bar is usually arranged coaxial with the spool having one end connected to the spool and the opposite end arranged to be locked against rotation in the event of a crash, e.g. by a locking pawl engaging a toothed ratchet wheel attached to the torsion bar.

Typically, to accommodate a torsion bar, a spool is made hollow and often assembled from two parts placed around the torsion bar and rivetted or staked to hold these together. This requires dedicated equipment on the retractor production line and the process of fixing the two spool parts together is time consuming. The resultant spool is not as strong as would be desired since there is no substantial support for the torsion bar around its main diameter. When load is applied such as in a crash situation, the webbing pin used to retain webbing in the spool can bend and is forced into the gap between the torsion bar and the spool member. Since both ends are supported the torsion bar bends at its middle, the weakest point. This bending changes the direction of load on the webbing pin/spool member, and the spool is weakened and may burst prematurely. The torsion bar has a tendency to bend and thus to fail prematurely. This is especially so since a webbing pin, traditionally sewn onto the end of the webbing to hold the end in the spool, often is able to push against the torsion bar under load conditions.

DE-U-296 13 044 which comprises the features of the preamble of claim 1, shows a spool assembly comprising a cylindrical hollow spool with a webbing entrance and exit slots, a torsion bar in the hollow section of the spool, a gear wheel to drive the spool and a filler plate in the entrance slot holding the webbing in the spool.

According to the present invention there is provided a spool assembly for holding safety belt webbing for a vehicle safety restraint, the spool assembly comprising a cylindrical central spool member having a hollow section along its axis, and having a webbing entrance slot and a webbing exit slot, a torsion bar located in the hollow section of the spool member, a gear wheel for rotatably driving the spool and a filler plate shaped to fit into the entrance slot and to abut the torsion bar and the cylindrical central spool member to hold them against movement relative to each other wherein the filler plate is shaped to hold the torsion bar against axial movement, by abutment with at least one shoulder on the torsion bar.

This arrangement obviates the need to rivet or stake the parts together thus saving costs and production time and the spool assembly is stronger under load.

Preferably the filler plate is a moulded part formed of a plastics material. Alternatively it can be made of die-cast metal.

Advantageously the filler plate comprises means to hold the torsion bar substantially along its whole length in a line generally diametrically opposite the position of a webbing pin, which is a pin fastened in the end of the belt webbing to retain webbing in the spool.

Thus the filler plate fills the gap around the torsion bar opposite the webbing pin, so that load applied to the torsion bar is less likely to cause it to bend and improving the strength of the retractor.

A spool according to the invention can be made more cheaply and more quickly, since there are less parts to assemble, and less manufacturing steps, particularly compared to the rivetted spools of the prior art.

For a better understanding of the present invention and to show how the same may be carried into effect, reference will now be made to the accompanying drawings in which:
Figure 1 is an axial cross-sectional view of a retractor spool according to the present invention;
Figure 2 is a longitudinal cross-sectional view of the retractor spool of figure 1;
Figure 3 is an exploded perspective view of the retractor spool of figures 1 and 2.

In the figures like references denote like parts.

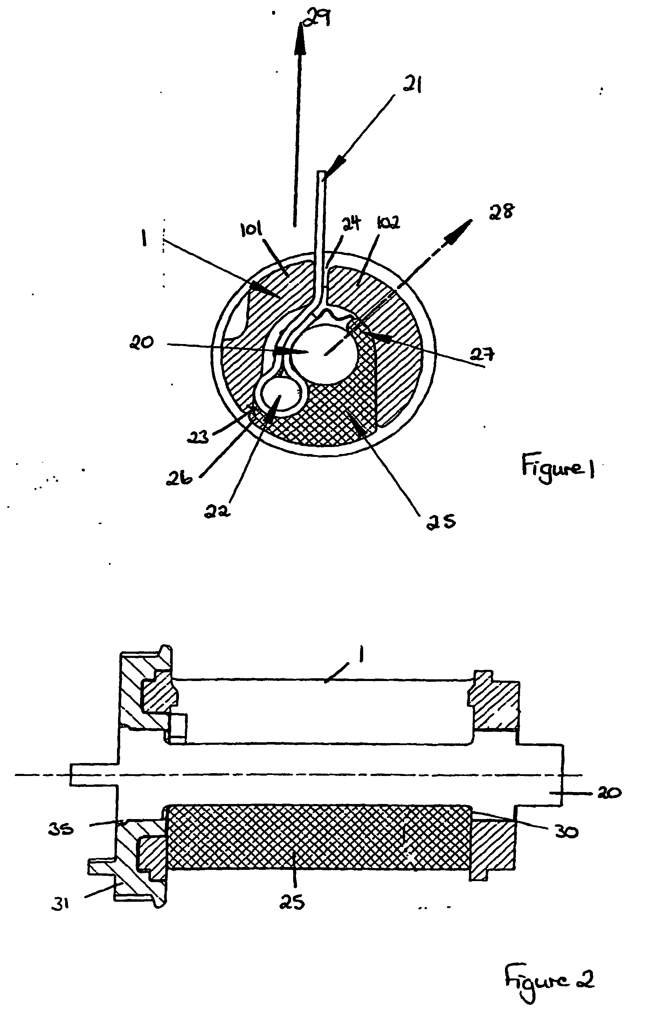

In figure 1 a spool 1 has a hollow cylindrical shape and comprises two parts 101 and 102 each formed of moulded plastics material. The spool 1 has a main central cylindrical section and two integral end plates as can most clearly be seen in figure 3. The hollow centre of the spool 1 extends axially the length of the spool 1 and through the end plates.

The two parts 101 and 102 of the spool 1 surround a torsion bar 20, and webbing 21 is held in the hollow part, in a gap between the spool parts 101 and 102 and the torsion bar 20. The end of the webbing 21 is sewn around a webbing pin 22 which jams into the gap and prevents the webbing 21 being detached from the spool under load. The pin 22 fits into a relatively large recess 23 formed at one junction of the two parts of the spool 1 (this is the lower junction as illustrated in figure 1). Into this recess 23 is placed a filler plate 25 formed of moulded plastics material and profiled to fill the gap and preferably fit snugly into the recess 23, around at least a portion of the webbing pin 22 and around at least a portion of the torsion bar 20. To this end the filler plate 25 has, in cross section, two opposing arcuate arms, one arm 26 abutting the webbing pin 22, and the other arm 27 abutting the torsion bar 20. The arms 26 and 27 abut the pin 22 and the bar 20 respectively along their lengths and preferably around a substantial portion of their respective circumferences. As illustrated, this portion is about 50% but less or more is contemplated for example anything from 20% to 80% would be possible provided sufficient support is given to resist bending of the torsion bar under load. The arms may clip resiliently onto the pin 22 or bar 20 respectively. This provides support for the webbing pin 22 and for the torsion bar 20 along a substantial portion of their respective length and resists the forces which, under load, tend to bend the torsion bar 20 and to pull the two parts of the spool away from each other. The arrow 28 indicates the direction of pull on the torsion bar 20 when the spool is under load with the webbing being pulled in the direction of arrow 29.

The other junction 24 of the two parts of the spool (at the top of figure 1) forms a slot through which the webbing 21 exits from the spool.

The filler plate 25 also provides a smooth outer surface so that webbing can pass smoothly over the outside of the spool 1 and does not snag or interfere with the webbing pin 22 in the recess 23. This assists in the smooth and satisfactory operation of a retractor fitted with such a spool.

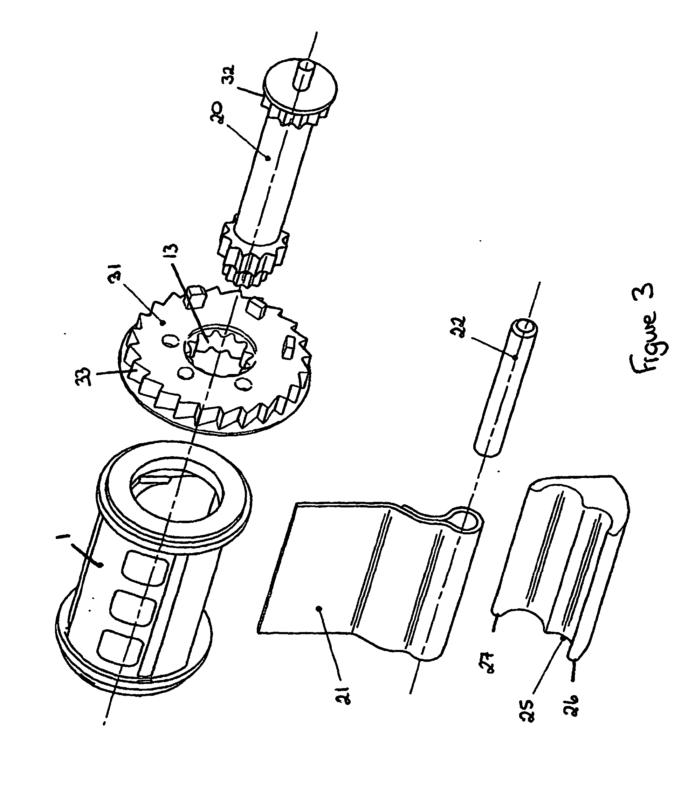

In figure 2 the spool 1 is shown in longitudinal cross-section, and it can be seen that the filler plate 25 extends the length of the spool. At the right hand end, as shown in the figure, the filler plate 25 slots behind a shoulder 30 of the torsion bar 20 preventing the torsion bar from moving axially to the left. At the left hand end, as illustrated, the torsion bar 25 has a flange 35 abutting the gear ring 31, preventing axial movement of the torsion bar 25 to the right.

In figure 3 the parts of the spool are shown in exploded form and the juxtaposition of the spool 1 with a gear wheel 31, mated with the torsion bar 20 is clearly shown. The gear wheel 31 has internal gear teeth 13 to engage the gear teeth 32 at one end of the torsion bar, and has external gear teeth 33 which are engaged by a pawl (not shown) in known manner when it is required to lock the spool 1 against further pay-out of webbing in an emergency situation.

The arcuate arms 26 and 27 of the filler plate 25 can be clearly seen in Figure 3.

## Claims

1. A spool assembly for holding safety belt webbing for a vehicle safety restraint, the spool assembly comprising a cylindrical central spool member (1) having a hollow section along its axis, and having a webbing entrance slot and a webbing exit slot (24), a torsion bar (20) located in the hollow section of the spool member, a gear wheel (31) for rotatably driving the spool and a filler plate (25) shaped to fit into the entrance slot, **characterised in that** the filler plate (25) abuts the torsion bar (20), and the cylindrical central spool member (1) to hold them against movement relative to each other, wherein the filler plate (25) is shaped to hold the torsion bar (20) against axial movement, by abutment with at least one shoulder on the torsion bar (20).

2. A spool assembly according to claim 1 wherein the cylindrical central spool member (1) comprises two separately formed pieces (101, 102).

3. A spool according to claim 2 wherein the filler plate (25) has a first arm (27) which abuts the torsion bar (20) about a substantial portion of the circumference of the torsion bar (20).

4. A spool according to claim 3 wherein the filler plate first arm (27) abuts approximately 50% of the circumference of the torsion bar (20).

5. A spool according to claim 4 wherein the arm (27) extends along a major portion of the length of the torsion bar (20).

6. A spool according to claims 4 or 5 wherein the arm (27) is resilient so as to grip to torsion bar (20).

7. A spool according to claims 4, 5 or 6 wherein the arm (27) is arcuate in cross section.

8. A spool according to any one of the preceding claims wherein the filler plate (25) is a moulded part formed of a plastics material.

9. A spool according to any one of claims 1 to 7 wherein the filler plate (25) is made by die-casting metal.

10. A spool according to any one of the preceding claims wherein the filler plate (25) further comprises a second arm (26) for holding a pin (22) securing the webbing (21) in the spool (1).

11. A spool according to claim 10 wherein said second arm (26) extends substantially the length of the spool (1).

12. A spool according to claim 10 or 11 wherein said second arm (26) is arcuate and is generally positioned diametrically opposite the first arm (27).

## Patentansprüche

1. Trommelanordnung für das Aufnehmen des Sicherheitsgurtbandes für eine Fahrzeugsicherheitsrückhaltevorrichtung, wobei die Trommelanordnung aufweist: ein zylindrisches mittleres Trommelement (1) mit einem hohlen Abschnitt längs seiner Achse und einem Bandeintrittsschlitz und einem Bandaustrittsschlitz (24); einen Drehstab (20), der im hohlen Abschnitt des Trommelelementes angeordnet ist; ein Zahnrad (31) für das drehbare Antreiben der Trommel; und eine Füllplatte (25), die so geformt ist, dass sie in den Eintrittsschlitz passt, **dadurch gekennzeichnet, dass** die Füllplatte (25) an den Drehstab (20) anstößt und das zylindrische mittlere Trommelement (1) sie gegen eine Bewegung relativ zueinander hält, wobei die Füllplatte (25) so geformt ist, dass sie den Drehstab (20) gegen eine axiale Bewegung durch ein Anstoßen an mindestens einen Vorsprung am Drehstab (20) hält.

2. Trommelanordnung nach Anspruch 1, bei der das zylindrische mittlere Trommelement (1) zwei separat ausgebildete Teile (101, 102) aufweist.

3. Trommel nach Anspruch 2, bei der die Füllplatte (25) einen ersten Arm (27) aufweist, der an den Drehstab (20) um einen wesentlichen Abschnitt des Umfanges des Drehstabes (20) anstößt.

4. Trommel nach Anspruch 3, bei der der erste Arm (27) der Füllplatte gegen annähernd 50 % des Umfanges des Drehstabes (20) stößt.

5. Trommel nach Anspruch 4, bei der sich der Arm (27) längs eines Hauptabschnittes der Länge des Drehstabes (20) erstreckt.

6. Trommel nach Anspruch 4 oder 5, bei der der Arm (27) elastisch ist, um so den Drehstab (20) zu erfassen.

7. Trommel nach Anspruch 4, 5 oder 6, bei der der Arm (27) einen bogenförmigen Querschnitt zeigt.

8. Trommel nach einem der vorhergehenden Ansprüche, bei der die Füllplatte (25) ein Formteil aus einem Kunststoffmaterial ist.

9. Trommel nach einem der Ansprüche 1 bis 7, bei der die Füllplatte (25) aus Druckgussmetall hergestellt wird.

10. Trommel nach einem der vorhergehenden Ansprüche, bei der die Füllplatte (25) außerdem einen zweiten Arm (26) für das Halten eines Stiftes (22) aufweist, der das Band (21) in der Trommel (1) sichert.

11. Trommel nach Anspruch 10, bei der sich der zweite Arm (26) im Wesentlichen über die Länge der Trommel (1) erstreckt.

12. Trommel nach Anspruch 10 oder 11, bei der der zweite Arm (26) bogenförmig und im Allgemeinen diametral entgegengesetzt dem ersten Arm (27) positioniert ist.

## Revendications

1. Assemblage de bobine pour retenir une sangle de ceinture de sécurité d'un dispositif de retenue de sécurité d'un véhicule, l'assemblage de bobine comprenant un élément de bobine central cylindrique (1) comportant une section creuse le long de son axe et comportant une fente d'entrée de la sangle et une fente de sortie de la sangle (24), une barre de torsion (20) agencée dans la section creuse de l'élément de bobine, une roue d'engrenage (31) pour entraîner la bobine par rotation et une plaque de remplissage (25) formée de sorte à pouvoir être ajustée dans la fente d'entrée, **caractérisé en ce que** la plaque de remplissage (25) bute contre la barre de torsion (20) et l'élément de bobine central cylindrique (1) pour les retenir contre un déplacement de l'un par rapport à l'autre, la plaque de remplissage (25) étant destinée à retenir la barre de torsion (20) contre un déplacement axial, par butée contre au moins un épaulement sur la barre de torsion (20).

2. Assemblage de bobine selon la revendication 1, dans lequel l'élément de bobine central cylindrique (1) comprend deux pièces formées séparément (101, 102).

3. Bobine selon la revendication 2, dans laquelle la plaque de remplissage (25) comporte un premier bras (27), butant contre la barre de torsion (20) autour d'une partie substantielle de la circonférence de la barre de torsion (20).

4. Bobine selon la revendication 3, dans laquelle le premier bras (27) de la plaque de remplissage bute contre environ 50% de la circonférence de la barre de torsion (20).

5. Bobine selon la revendication 4, dans laquelle le bras (27) s'étend le long d'une majeure partie de la longueur de la barre de torsion (20).

6. Bobine selon les revendications 4 ou 5, dans laquelle le bras (27) est élastique de sorte de se fixer sur la barre de torsion (20).

7. Bobine selon les revendications 4, 5 ou 6, dans laquelle le bras (27) a une section transversale arquée.

8. Bobine selon l'une quelconque des revendications précédentes, dans laquelle la plaque de remplissage (25) est constituée par une pièce moulée composée d'un matériau plastique.

9. Bobine selon l'une quelconque des revendications 1 à 7, dans laquelle la plaque de remplissage (25) est composée de métal moulé sous pression.

10. Bobine selon l'une quelconque des revendications précédentes, dans laquelle la plaque de remplissage (25) comprend en outre un deuxième bras (26) pour retenir la goupille (22) fixant la sangle (21) dans la bobine (1).

11. Bobine selon la revendication 10, dans laquelle ledit deuxième bras (26) s'étend pratiquement le long de la longueur de la bobine (1).

12. Bobine selon les revendications 10 ou 11, dans laquelle ledit deuxième bras (26) est arquée et est en général positionné en un point diamétralement opposé au premier bras (27).
